# EUROPEAN PATENT SPECIFICATION

(11) **EP 1 120 363 B1**
(45) Date of publication and mention of the grant of the patent: **12.10.2005**
(21) Application number: 01300673.9
(22) Date of filing: 25.01.2001
(51) Int. Cl.: B65F 9/00, B65F 3/28, B60P 1/36

(54) **Lorry trailer for use in a material delivery and waste collection system**
Anhänger für einen Lastkraftwagen zur Anwendung in einem System zum Zuführen von Material und zum Sammeln von Abfällen
Remorque de camion pour utilisation dans un système d'alimentation de matériaux et de collecte de déchets

(30) Priority: 25.01.2000 GB 0001604
(43) Date of publication of application: 01.08.2001
(73) Proprietor: Sumpter, Derek Edward, Gravesend DA12 3HG (GB)
(72) Inventor: Sumpter, Derek Edward, Gravesend DA12 3HG (GB)
(74) Representative: Jenkins, Peter David

(56) References cited:
- EP-A- 0 081 695
- FR-A- 2 572 371
- US-A- 3 514 902
- US-A- 3 998 343
- US-A- 5 551 824

## Description

The present invention relates to material and waste transportation, in particular including an improved routine for delivery of newsprint and the removal of waste paper and apparatus for use in such a routine and other situations.

Transportation of goods by road is normally conducted using large articulated lorries having a trailer hauled by a tractor unit. Typically, having delivered its load, the lorry returns to its home depot empty. This is wasteful of driver and vehicle time, being a period of zero productivity, and is also a waste of fuel, thus raising environmental concerns. The government is keen to encourage hauliers to use full trailers on the return leg of each journey. However, whilst being an admirable aim, it is, in practice, difficult to achieve, for several reasons. Products made by the concern to whom the delivery was made may not require transportation of its own goods in the direction of the lorry's home depot. Furthermore, trailers may be designed specifically for transporting a certain type of product and are not readily adaptable to carrying other goods.

In the newsprint industry, reels of newsprint are typically delivered to a printing works on a trailer with fabric side curtains carried upon a steel frame, typically known as a "Tautliner". Printing works produce a great deal of waste paper. Typically, on a continuous basis as it is produced, a compactor unit compresses waste paper into a 6,1 m (20 foot) long bin. Typically, two bins are transported for disposal or recycling upon a single trailer. The trailer will be different from that used to deliver the newsprint. Typically, approximately six of these bins are required to contain the waste generated at a newspaper printing works from processing the newsprint of a single delivery of a typical 13m trailer. Each bin in turn must be mounted upon and demounted from the trailer using a hook lift vehicle before the contents can be disposed of. The system is generally similar to that in our copending application GB 2 307 895A. This procedure is unduly time consuming involving many movements of bins. This additionally produces a considerable amount of noise.

It is with these problems in mind, particularly with reference to the newsprint industry, that the present invention has been devised.

Our application EP 1 061 012 already addresses this problem and describes a material delivery and waste collection system for a premises; the system comprising (i) providing at least two, wheeled, enclosed elongate material-carrying containers each having a floor, walls, a roof and an access door mounted within a frame at the rear of the container; (ii) providing the premises with a delivery bay for transfer of materials from the rear of a first container into the premises; and (iii) providing the premises with at least one waste collection bay; wherein the waste collection bay includes a compactor unit having an input adapted to receive waste material and an output for expulsion of the waste material; the system comprising mutually cooperating connecting means provided on the compactor units and on the rear of the second container; the connecting means providing a substantially rigid connection between the output of the compactor unit and the container. Preferably, the wheeled container is in the form of a trailer of an articulated lorry.

Our application EP 1 061 012 also describes a trailer for an articulated lorry adapted for use in the system described above. The trailer comprises an enclosed elongate material-carrying container having a floor, walls, a roof and an access door mounted within a frame at the rear of the trailer; wherein the interior surfaces of the walls and roof are substantially flat and uninterrupted and the floor includes a plurality of longitudinally extending guide tracks; wherein further, the rear of the trailer comprises cooperative means for connecting the trailer to the output of a compactor unit. The trailer further comprises means for discharging waste material from the interior of the container. Typically, the container is mounted at the rear of the trailer upon a chassis for pivotal movement with respect thereto. Alternatively, the container may include a tipping ram to tilt the trailer thereby discharging the contents. Preferably, the access door is a vertically slidable door and the frame is itself in the form of an outwardly opening door.

Further development work has led to the present invention in which it has been appreciated that the system and trailer can be further modified to avoid the requirement for the premises to have compactor units.

US3514902 describes a refuse vehicle in accordance with the preamble of claim 1.

EP 0 081 695 describes a trailer having a moveable headboard to eject material from within the cavity of the trailer.

FR 2572371 describes a waste material transfer system comprising a waste material station for receipt of waste material from a variety of different vehicles. The waste material station includes a plurality of compactors for transferring the waste material to different vehicles for onward transport, for example, to land-fill.

In a first aspect, the present invention provides a trailer as defined in Claim 1.

Preferably, the door in the roof of the vehicle is horizontally slidable.

Preferably, the transport means comprises a walking floor.

Preferably, a sheet, typically of canvas, is attached to the bottom edge of the headboard. The trailer further comprises means for discharging waste material from the interior of the container. Typically such means comprises mounting the container for pivotal movement about an axis adjacent the front doors of the trailer and includes means for elevating the rear end of the container thereby tipping the container.

In another aspect, there is provided a material delivery and waste collection system for a premises; the system comprising (i) providing at least two trailers of the type defined above; (ii) providing the premises with a delivery bay for transfer of materials from a first such container into the premises; and (iii) providing the premises with at least one waste collection bay wherein the waste collection bay includes an output for expulsion of the waste material into a second such container.

The term walking floor, when used herein, means a floor comprising a plurality of parallel longitudinal floor elements or slats arranged to reciprocate so as to produce a walking effect, whereby an article placed upon the floor is caused to advance in a chosen direction. Such arrangements are well known in the field of trailers. A vehicle having such a walking floor is described in US 5551824, to which further reference should be made. The term is also intended to cover other arrangements which produce this effect. Examples of alternative arrangements are shown in EP 0081695, US 3998343 and US 4747747 to which further reference should also be made. These publications also describe the use of moveable walls or headboards.

The above and other aspects of the present invention will now be described in further detail by way of example only with reference to the accompanying drawings, in which:
- Figure 1: is a rear view of a trailer in accordance with the present invention;
- Figure 2: is a side view of one embodiment of a trailer in accordance with the present invention;
- Figure 3: is a side view of another embodiment of a trailer in accordance with the present invention;
- Figure 4: is a part cut-away side view of the embodiment of Figure 3;
- Figure 5: is a detailed perspective view of the mounting arrangement of the roof hatch of the trailer of Figure 3;
- Figure 6: is a side view of the hatch mounting rails of the trailer of Figure 5;
- Figure 7: is a part cut-away plan view of the trailer of Figure 3;
- Figure 8: is a schematic plan view illustrating the process of the present invention; and
- Figure 9: shows in 6 side views, the application of the process of the present invention to a trailer of the present invention.

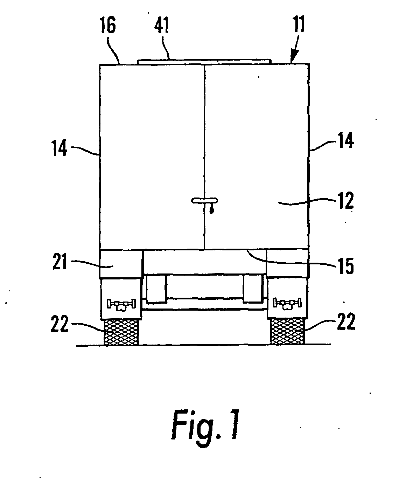

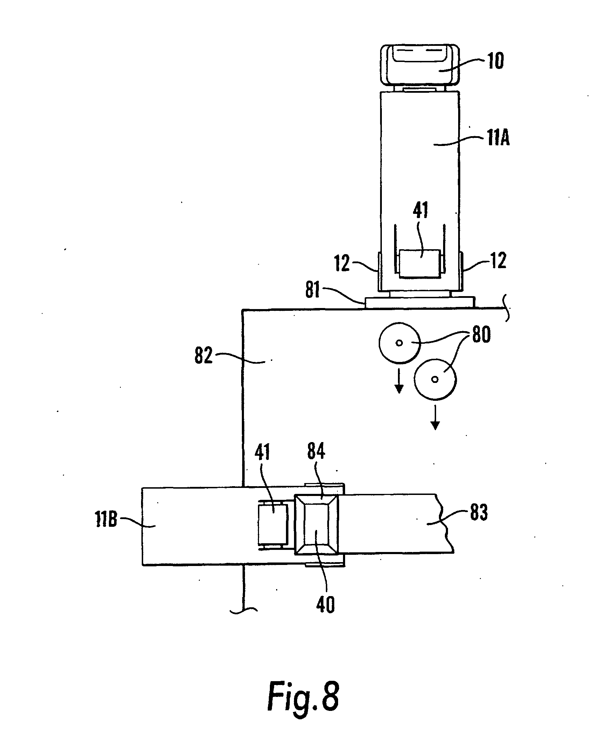

With reference to Figures 1 to 7, the trailer, shown generally at 11, for a lorry tractor unit 10 (Figure 8) will be explained. Firstly, it will be helpful to define that in the context of trailers, the terms front' and 'rear' are with respect to the conventional access doors 12, which are taken to be at the front of the trailer. The trailer 11 comprises a container 13 defined by two side walls 14, floor 15, roof 16, rear wall 17 and the front doors 12.

Many features of the trailer 11 are largely conventional and do not need to be described in further detail. Indeed, this is a particular advantage of the present system and trailer. The container 13 is mounted for pivotal movement about an axial horizontal axis 20 upon a chassis 21. Chassis 21 includes additional conventional trailer components such as three pairs of road wheels 22 and front 23 and rear 24 support legs for use when the trailer is not coupled to a tractor unit. Pivotal movement is actuated by means of a pneumatic or hydraulic piston 25, generally vertically mounted but adapted to pivot as required during extension thereof and thus pivoting of the container 13.

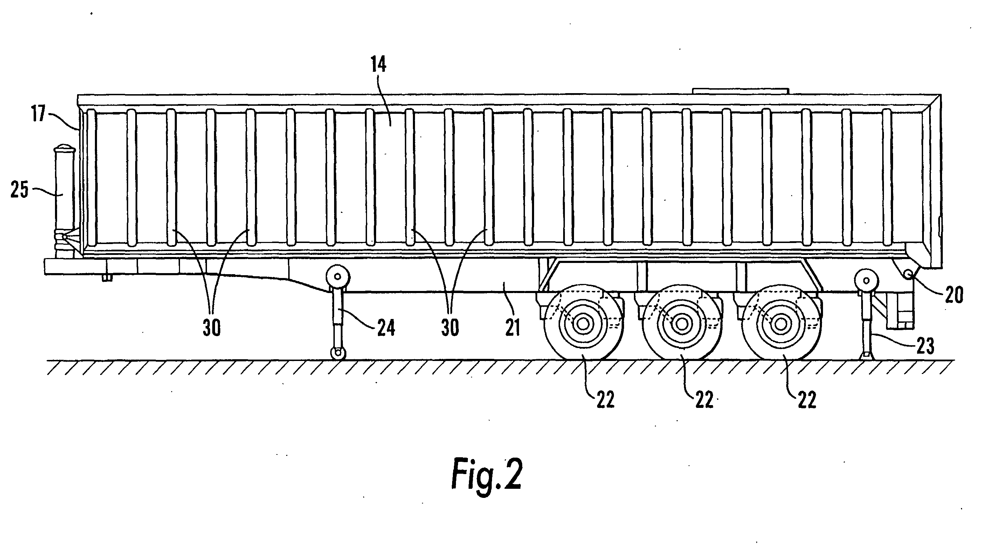

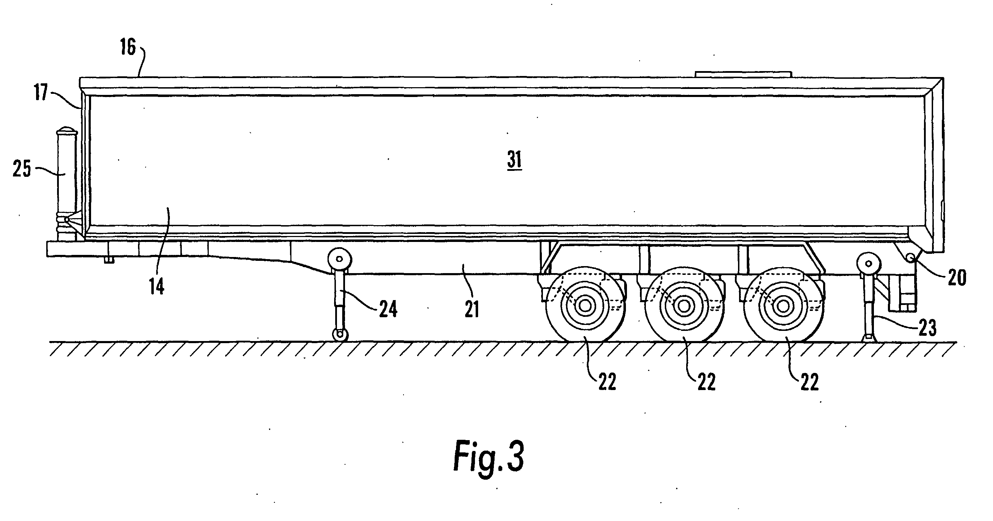

One embodiment of a container 13 is shown in Figure 2 and is typically formed from 5mm aluminium alloy plate and includes reinforcing members 30 spaced at approximately 400mm centres. The embodiment shown in Figure 3 is identical save that, for aesthetic and streamlining reasons, the container is clad externally with an appropriate sheet material 31. The use of aluminium means that the container is equally suitable for the transportation of grain/cereals. Indeed the inventive system will find use in the delivery of products to, for example, supermarkets. Supermarkets produce a large quantity of paper and cardboard waste which is presently compacted into small containers in the same manner as in the waste newsprint industry. In this regard, it will be apparent that the trailer could also be refrigerated.

Typically, the container 13 is around 13m long, 2.55m wide and 2.5m tall.

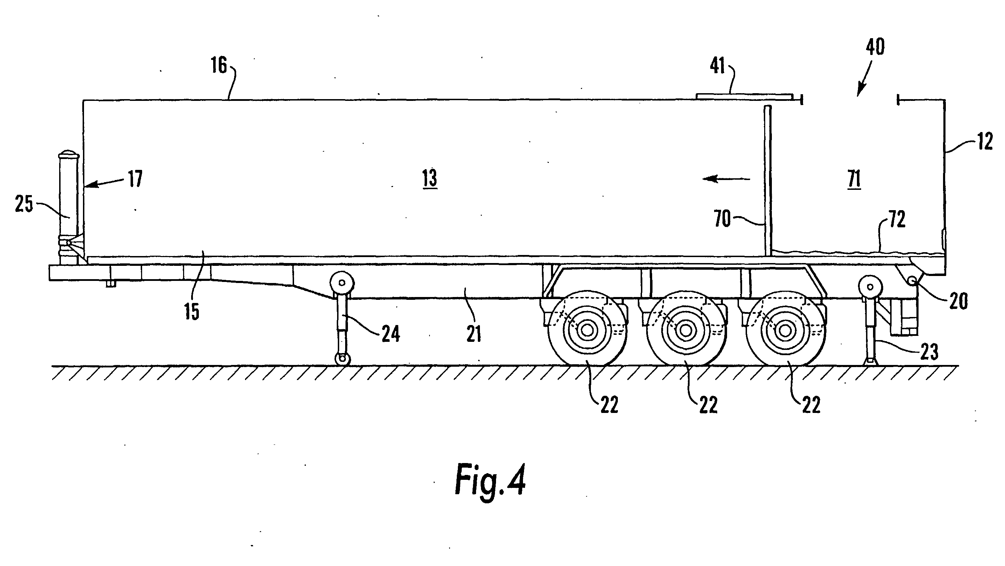

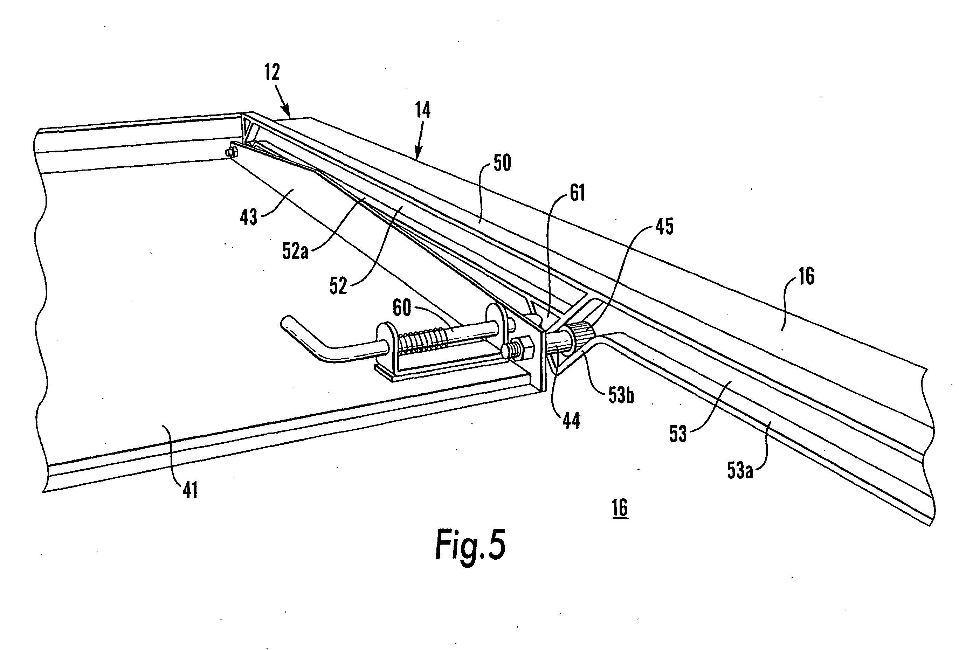

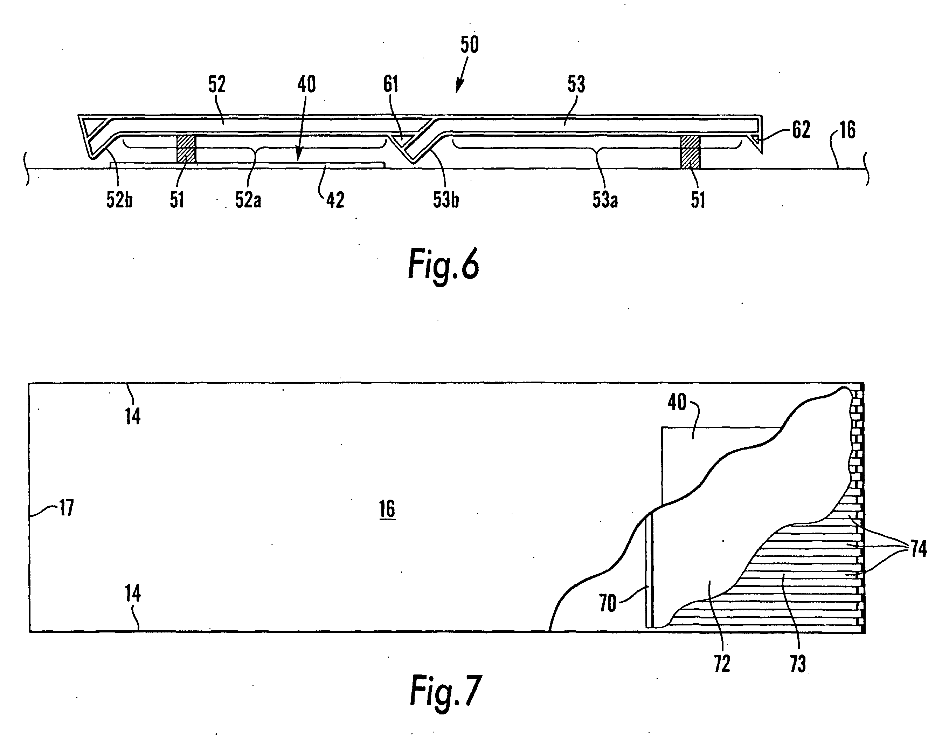

As is most clearly seen from Figures 4 and 5, the roof 16 of the trailer includes a hatch comprising an aperture 40 coverable by a horizontally sliding cover 41. The cover 41 forms a water-tight seal around the aperture 40. Those skilled in the art will be readily able to devise suitable water-tight arrangements. In the embodiment shown, a compressible rubber seal 42 (Figure 6) is provided around the periphery of the aperture 40. The cover 41 is arranged to slide into position over the aperture 40 and then down to compress the seal 42 by means of an assembly as will now be described with reference to Figures 5 and 6.

The cover 41 is provided with an upstanding lip 43 on each side. Each lip carries an outwardly projecting axle 44 towards each end thereof. Each axle carries a wheel 45.

A channel assembly 50 is mounted upon the roof 16 of the trailer and spaced therefrom by spacers 51. The channel assembly 50 includes two separate inwardly directed co-axial channels 52,53, Each channel 52, 53 includes a horizontal portion 52a,53a which terminates at its end adjacent the front of the trailer in an inclined portion 52b,53b. Figures 5 and 6 show the left-hand channel assembly 50 (as viewed facing the doors 12 of the trailer). The right-hand assembly 50 is the mirror image.

Each channel 52,53 is associated with a respective wheel 45 of the cover 41. As will be appreciated, the cover 41 is closed by rolling horizontally along the channels 52a,53a before being biased by means of the inclined portions 52b,53b downwardly and against the rubber seal 42 around the aperture 40. Opening is the reverse operation.

In the embodiment shown, the cover 41 is manually operated and secured into either the open or closed positions by means of a bolt 60 mounted upon the cover 41 engaging corresponding front 61 and rear 62 recesses formed in the channel assembly 50. However, in the preferred embodiments, the cover 41 is remotely operated, such as by means of a hydraulic or pneumatic ram coupled to the cover or by means of an electric motor. In such cases, the inclusion of a bolt is unnecessary.

Within the trailer is transverse wall or headboard 70 (Figures 4 and 7) which is arranged by suitable means to be advanceable towards the rear wall 17 of the trailer in the direction shown by the arrow in Figure 4. The headboard 70 divides the container 13 to form a cavity 71 with the front of the trailer (namely with the doors 12). Attached to the headboard 70 at its lower edge is a strong canvas sheet 72. The canvas sheet 72 is dimensioned such that when the headboard 70 is in its initial position just rearward of the aperture 40 (as shown in Figure 4), the canvas extends from the headboard to the doors 12 of the trailer. Thus the area of the canvas sheet 72 corresponds with the initial floor area of the cavity 71.

The floor of the trailer is provided with a walking floor 73 of the type described above. The walking floor comprises a series of parallel longitudinal slats 74. The slats 74 are arranged to move back and forth with a reciprocating motion, alternate slats 74 moving in opposite directions. Such floors are well known in the art and will not be described in any further detail.

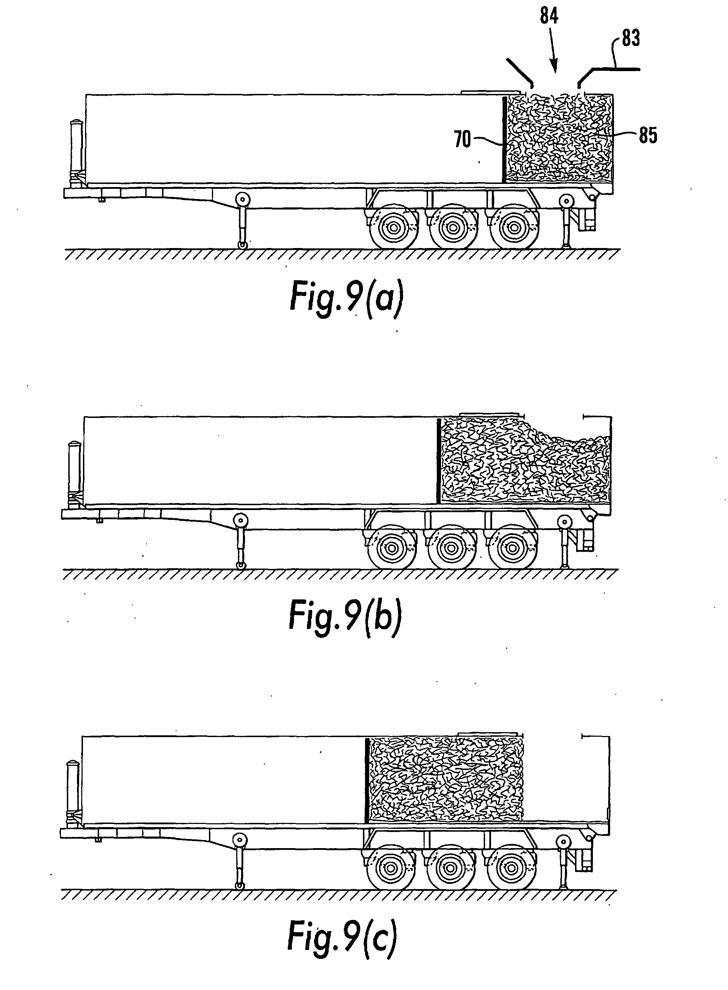

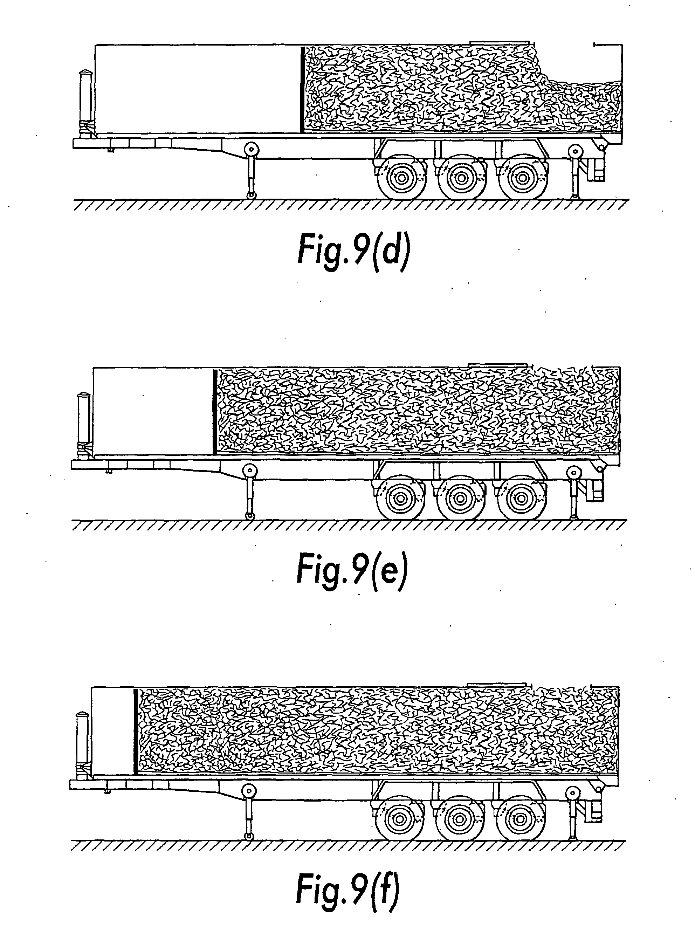

With particular reference to Figures 8 and 9, the process of the present invention will now be explained. A lorry comprising a tractor unit 10 and a first trailer 11 A carrying newsprint reels 80 reverses up to a loading bay 81, of a printing works 82 whereupon the reels are unloaded through doors 12 by means of the walking floor. Newspaper waste is removed from the printing process and delivered along a discharge pathway 83 (which is illustrated only schematically) to a hopper 84. Hopper 84 discharges into a second trailer 11B of identical design to first trailer 11A, positioned underneath the hopper 84 through open aperture 40 of the hatch in the roof 16 of trailer 11B. Second trailer 11B remains in place on site at the printing works whilst the discharging process is ongoing.

The process operates as follows. A fully laden lorry arrives and discharges its load. It then proceeds to the waste exit area of the works 82 where the tractor unit deposits the now empty trailer under the hopper 84 for receipt of waste material and retrieves the filled trailer which it then returns to its home depot or elsewhere for disposal. The process is repeated on each subsequent visit.

In a typical arrangement, however, the printing works 82 will have several hoppers 84 with associated discharge pathways 83.

Initially, the transverse headboard 70 will be at the position indicated in Figures 4, 7 and 9a. The hopper 84 discharges waste paper 85 though open aperture 40 into the cavity 71 of the trailer where it falls upon the canvas sheet 72. Being attached to the base of the headboard 70, the weight of waste 85 falling on the canvas sheet 72 acts to prevent the headboard being pushed towards the rear of the trailer as the mass of waste 85 accumulates.

As cavity 71 becomes full, one or more sensors (not shown) mounted about the aperture 40 trigger a control mechanism which actuates the walking floor 73 for a predetermined time to move the contents of the cavity 71 towards the rear wall 17 thereby enlarging cavity 71 (Figure 9b). It has been found that with waste paper from a newspaper printing works the weight of the paper is sufficient to compact the mass of waste 85 such that as the mass is advanced towards the rear of the container 13 the mass retains its generally cuboid shape (see Figure 9c). The forward face of the mass 85 does not collapse once it is moved away from contact with the doors 12 of the trailer.

The process is repeated (Figures 9a-e) with the headboard 70 indexing backwardly towards the rear wall 17 of the trailer until the container 13 is substantially full (Figure 9f). Typically, this will involve 5 or 6 indexing steps, but this will depend upon the dimensions of the trailer.

The hatch is then closed and the trailer is then ready to be collected on the next visit of the lorry delivering newsprint. At the site where the waste paper is to be discharged, for example at a landfill site or recycling plant, the trailer discharges the waste by means of the walking floor operating in the reverse direction or by means of tipping the container about pivot point 20 by means of ram 25. During discharging, the canvas sheet 72 attached to the bottom edge of the headboard 70 acts to pull the headboard 70 towards the front of the trailer as the waste is discharged.

Whilst attached to the tractor unit 10, the walking floor 73 and the cover 41 closing assembly can be powered by the tractor unit. However, when detached from the tractor unit 10, these components will be powered by means of an on-site power plant at the works 82.

The present invention reduces the number of on site operations required, avoids the need for raising and lowering heavy containers loaded with waste materials and allows removal of waste to be effected in a straightforward, quick, efficient and cost-effective manner. The present invention also significantly reduces road movements, in ideal cases by 50%. Additionally, in the preferred embodiment, the safety of road delivery is enhanced by the metal construction of the trailer. Furthermore, the present invention can result in capital cost savings by avoiding the need for compactors at the production site, and their ongoing running and maintenance costs.
Whilst having been described with reference to the paper industries, it will be appreciated that the aspects of the present invention are equally suitable for use in other industries, for example in removal of clinical waste. As during use, access into the container is solely via the hatch in the roof, the present invention provides improved hazard security and safety.

## Claims

1. An articulated lorry trailer (11) comprising an enclosed elongate material-carrying container (13) carried upon a chassis (21) having a plurality of road wheels (22); wherein the container (13) has a floor (15), a rear (17) and two side (14) walls, a roof (16) and a front having an access door (12) therein, wherein the interior surfaces of the container (13) are substantially flat; wherein the interior of the container (13) includes a transverse moveable wall or headboard (70) defining a cavity (71) between the said wall or headboard (70) and the access door (12) wherein the moveable wall or headboard (70) is advanceable between a first position adjacent the access door (12) wherein the capacity of the cavity (71) is at a minimum and a second position remote the access door (12) in which the capacity of the cavity (71) is at a maximum; **characterised in that** the container (13) further comprises transport means to cause longitudinal transport of material placed within the cavity (71); and **in that** an aperture (40) is provided in the roof (16) of the container (13) adjacent the access door (12) and a cover (41) is provided moveable between a first position covering the aperture (40) and a second position wherein the aperture (40) is unobstructed.

2. A trailer as claimed in Claim 1 wherein the transport means comprises a walking floor (73).

3. A trailer as claimed in Claim 1 or Claim 2 wherein a sheet (72), preferably of canvas, is attached to the bottom edge of the moveable wall or headboard (70).

4. A trailer as claimed in any one of claims 1 to 3, wherein the cover (41) has two wheels (45) extending transversely outwardly from each side edge (43) of the cover (41), each wheel (45) engaging a respective horizontal longitudinal channel (52,53) formed in respective channel assemblies (50) mounted on the roof (16) of the container (13) on either side of the aperture (40).

5. A trailer as claimed in Claim 4 wherein each channel (52,53) of each channel assembly (50) comprises a substantially horizontal portion (52a,53a) and an inclined portion (52b,53b), the inclined portion (52b,53b) being at that end of each channel (52,53) most adjacent to the aperture(40) and being downwardly orientated with respect to the horizontal portion (52a,53a)

6. A trailer as claimed in any one of claims 1 to 5 wherein movement of the cover between said first and second positions is remotely actuated by means of hydraulic or pneumatic rams or pistons.

7. A material delivery and waste collection system for a premises (82); the system comprising (i) providing at least two trailers as claimed in any one of claims 1 to 6 (ii) providing the premises (82) with a delivery bay (81) for transfer of materials (80) from a first such trailer (11A) into the premises (82); and (iii) providing the premises (82) with at least one waste collection bay wherein the waste collection bay includes an output (84) for expulsion of waste material into a second such trailer (11B) through the aperture (40) in the roof (16) thereof.

## Patentansprüche

1. Sattelschlepperanhänger (11) mit einem geschlossenen länglichen Materialtransportcontainer (13), der von einem Chassis (21) mit mehreren Straßenrädern (22) getragen ist, wobei der Container (13) einen Boden (15), eine Rückwand (17) und zwei Seitenwände (14), ein Dach (16) und eine Vorderseite mit einer Zugangstür (12) in dieser aufweist, wobei die Innenflächen des Containers (13) im wesentlichen eben sind; wobei das Innere des Containers (13) eine bewegbare Querwand oder ein Kopfteil (70) aufweist, welche einen Hohlraum (71) zwischen der Wand oder dem Kopfteil (70) und der Zugangstür (12) begrenzt, wobei die bewegbare Wand oder das Kopfteil (70) zwischen einer ersten Position nahe der Zugangstür (12), in der die Kapazität des Hohlraums (71) minimal ist, und einer von der Zugangstür (12) entfernten zweiten Position bewegbar ist, in der die Kapazität des Hohlraums (71) maximal ist, **dadurch gekennzeichnet, daß** der Container (13) ferner Transporteinrichtungen für den längsgerichteten Transport von in den Hohlraum (71) plaziertem Material aufweist, und daß in dem Dach (16) des Containers (13) eine Öffnung (40) nahe der Zugangstür (12) vorgesehen ist und eine zwischen einer ersten, die Öffnung (40) abdeckenden Position und einer zweiten, die Öffnung (40) freigebenden Position bewegbare Abdeckung (41) vorgesehen ist.

2. Anhänger nach Anspruch 1, bei dem die Transporteinrichtung einen Hubboden aufweist.

3. Anhänger nach Anspruch 1 oder Anspruch 2, bei dem eine Bahn (72), vorzugsweise aus Leinwand, am unteren Rand der bewegbaren Wand oder des Kopfteils (70) angebracht ist.

4. Anhänger nach einem der Ansprüche 1 bis 3, bei dem die Abdeckung (41) zwei Räder (45) aufweist, die sich von jedem Seitenrand (43) der Abdeckung (41) in Querrichtung nach außen erstrecken, wobei jedes Rad (45) in einen jeweiligen horizontalen längslaufenden Kanal (52, 53) eingreift, der in jeweiligen Kanalanordnungen (50) ausgebildet ist, welche auf dem Dach (16) des Containers (13) zu beiden Seiten der Öffnung (40) angebracht sind.

5. Anhänger nach Anspruch 4, bei dem jeder Kanal (52, 53) jeder Kanalanordnung (50) einen im wesentlichen horizontalen Bereich (52a, 53a) und einen schrägen Bereich (52b, 53b) aufweist, wobei der schräge Bereich (52b, 53b) sich an demjenigen Ende jedes Kanals (52, 53) befindet, das der Öffnung (40) am nächsten ist, und er in bezug auf den horizontalen Bereich (52a, 53a) abwärts gerichtet ist.

6. Anhänger nach einem der Ansprüche 1 bis 5, bei dem das Bewegen der Abdeckung zwischen der ersten und der zweiten Position mittels hydraulischer oder pneumatischer Stößel oder Kolben fernbetätigt erfolgt.

7. Materialliefer- und Abfallsammelsystem für ein Gebäude (82), wobei das System aufweist: (i) Vorsehen mindestens zweier Anhänger nach einem der Ansprüche 1 bis 6; (ii) Versehen des Gebäudes (82) mit einer Lieferstation (81) für den Transfer von Materialien (80) von einem ersten derartigen Anhänger (11A) in das Gebäude (82); und (iii) Versehen des Gebäudes (82) mit mindestens einer Abfallsammelstation , wobei die Abfallsammelstation eine Ausgabe (84) für das Ausgeben von Abfallmaterial in einen zweiten derartigen Anhänger (11B) durch die Öffnung (40) im Dach (16) desselben aufweist.

## Revendications

1. Remorque de semi-remorque (11) comprenant un conteneur encloisonné, allongé, de transport de matériau (13), supportée sur un châssis (21) ayant une pluralité de roues de route (22) ; dans laquelle le conteneur (13) a un plancher (15), une paroi arrière (17) et deux parois latérales (14), un toit (16) et un avant comportant une porte d'accès (12) à l'intérieur de celui-ci, dans laquelle les surfaces intérieures du conteneur (13) sont sensiblement plates ; dans laquelle l'intérieur du conteneur (13) comprend une paroi ou un hayon transversal(e) mobile (70) définissant une cavité (71) entre ladite paroi ou ledit hayon (70) et la porte d'accès (12), dans laquelle la paroi ou le hayon mobile (70) peut avancer entre une première position adjacente à la porte d'accès (12) dans laquelle la contenance de la cavité (71) est à un minimum, et une seconde position éloignée de la porte d'accès (12) dans laquelle la contenance de la cavité (71) est à un maximum ; **caractérisée en ce que** le conteneur (13) comprend en outre des moyens de transport destinés à provoquer le transport longitudinal du matériau placé à l'intérieur de la cavité (71) ; et **en ce qu'**une ouverture (40) est apportée dans le toit (16) du conteneur (13) de manière adjacente à la porte d'accès (12) et un couvercle (41) est apporté, déplaçable entre une première position recouvrant l'ouverture (40) et une seconde position dans laquelle l'ouverture (40) est dégagée.

2. Remorque selon la revendication 1, **caractérisé en ce que** les moyens de transport comprennent un plancher mobile (73).

3. Remorque selon la revendication 1 ou la revendication 2, **caractérisé en ce qu'**une feuille (72), de préférence en toile, est fixée au bord inférieur de la paroi ou du hayon mobile (70).

4. Remorque selon l'une quelconque des revendications 1 à 3, **caractérisé en ce que** le couvercle (41) présente deux roues (45) s'étendant transversalement vers l'extérieur à partir de chaque bord latéral (43) du couvercle (41), chaque roue (45) entrant en prise respective avec un canal longitudinal horizontal (52, 53) formé dans des structures de canaux respectives (50) montées sur le toit (16) du conteneur (13) de chaque côté de l'ouverture (40).

5. Remorque selon la revendication 4, **caractérisé en ce que** chaque canal (52, 53) de chaque structure de canal (50) comprend une partie sensiblement horizontale (52a, 53a) et une partie inclinée (52b, 53b), la partie inclinée (52b, 53b) se situant à l'extrémité de chaque canal (52, 53) la plus adjacente à l'ouverture (40) et étant orientée vers le bas par rapport à la partie horizontale (52a, 53a).

6. Remorque selon l'une quelconque des revendications 1 à 5, **caractérisé en ce que** le déplacement du couvercle entre lesdites première et seconde positions est actionné à distance au moyen de vérins ou de pistons hydrauliques ou pneumatiques.

7. Système de distribution de matériau et de ramassage des ordures pour un local (82), le système comprenant les étapes consistant à (i) apporter au moins deux remorques selon l'une quelconque des revendications 1 à 6 ; (ii) munir le local (82) d'une aire de réception (81) pour le transfert de matériau (80) à partir d'une telle première remorque (11A) dans le local (82) ; et (iii) munir le local (82) d'au moins une aire de ramassage des ordures, dans laquelle l'aire de ramassage des ordures comprend une sortie (84) destinée à l'expulsion de déchets dans une telle seconde remorque (11B), à travers l'ouverture (40) dans le toit (16) de celle-ci.
